# FASCICULE DE BREVET EUROPEEN

(11) **EP 3 271 993 B1**
(45) Date de publication et mention de la délivrance du brevet: **22.01.2025**
(21) Numéro de dépôt: 16707704.9
(22) Date de dépôt: 29.02.2016
(51) Int. Cl.: H02J 7/00, H02J 7/34

(54) **DISPOSITIF DE PILOTAGE D'ALIMENTATION ELECTRIQUE DE CIRCUIT POUR UN VEHICULE COMPRENANT UNE BATTERIE ET ENSEMBLE CORRESPONDANT**
VORRICHTUNG ZUR STEUERUNG DER STROMVERSORGUNG EINER SCHALTUNG FÜR EIN FAHRZEUG MIT EINER BATTERIE UND ENTSPRECHENDE ANORDNUNG
DEVICE FOR CONTROLLING THE ELECTRICAL POWER SUPPLY OF A CIRCUIT FOR A VEHICLE, COMPRISING A BATTERY AND CORRESPONDING ASSEMBLY

(30) Priorité: 17.03.2015 FR 1552160
(43) Date de publication de la demande: 24.01.2018
(73) Titulaire: Valeo Systemes Thermiques, 78320 Le Mesnil Saint Denis (FR)
(72) Inventeur: FOURNIER, Jonathan, 78322 Le Mesnil Saint-Denis Cédex (FR); ROUSSEIL, Xavier, 78322 Le Mesnil Saint-Denis Cédex (FR); GOUMAIN, Xavier, 78322 Le Mesnil Saint-Denis Cédex (FR)
(74) Mandataire: Valeo Systèmes Thermiques
(86) Numéro de dépôt international: PCT/EP2016/054241
(87) Numéro de publication internationale: WO 2016/146369

(56) Documents cités:
- EP-A1- 1 595 748
- DE-A1- 102007 062 955
- DE-A1- 102012 009 738
- DE-A1- 19 618 039
- US-A1- 2010 142 235

## Description

La présente invention concerne de manière générale l'alimentation électrique de circuit électrique ou électronique d'un véhicule automobile muni d'une batterie électrique.

De manière usuelle, un véhicule comprend des circuits électriques permettant d'alimenter différents équipements électriques, tels qu'un dispositif de chauffage additionnel ou un système d'éclairage. Le véhicule comporte aussi des circuits électroniques et notamment un système de calcul et de pilotage qui comprend par exemple un ou plusieurs calculateurs permettant de mémoriser des données et de piloter des équipements du véhicule. Ces circuits électriques ou électroniques sont destinés à être alimentés par la batterie du véhicule.

Cependant, au cours du fonctionnement du véhicule, la batterie peut être soumise à des chutes de tension. Pour compenser ces chutes de tension, le véhicule comprend une réserve capacitive, c'est-à-dire une réserve d'énergie électrique stockée par un ou plusieurs éléments capacitifs tels qu'un condensateur ou un super-condensateur. Lors d'une chute de tension, la réserve capacitive permet de continuer à alimenter les circuits du véhicule qui en ont besoin.

Cependant, on constate que la réserve capacitive du véhicule se décharge très rapidement. Ainsi, un calculateur du système de calcul et de pilotage du véhicule qui est train d'effectuer une opération d'écriture dans une mémoire, risque de ne pas disposer de suffisamment de temps pour finaliser cette opération. Cela peut avoir, entre autres, pour conséquence que le système de calcul et de pilotage du véhicule risque de générer des erreurs et/ou d'être détérioré.

DE102012009738 et EP1595748 divulguent des dispositifs de contrôle de ce type.

La présente invention a, entre autres, pour but de proposer un nouveau dispositif de pilotage de circuit permettant, en cas de chute de tension de la batterie, de privilégier l'alimentation d'un ou de certains circuits du véhicule, par exemple pour réduire le risque qu'un calculateur du véhicule n'ait pas le temps de finaliser une écriture dans une mémoire (telle qu'une mémoire morte) du système de calcul et de pilotage.

A cet effet, l'invention a pour objet un dispositif selon la revendication 1.

Un tel dispositif de pilotage permet, en cas de chute de tension de la batterie, de privilégier l'alimentation d'un ou de certains circuits du véhicule, en isolant ledit premier circuit de l'élément de stockage d'énergie. Ainsi, l'énergie de l'élément de stockage d'énergie peut être utilisée pour continuer d'alimenter un calculateur le temps qu'il finisse une opération d'écriture en mémoire.

Un tel dispositif permet en outre, dans le cas où ledit premier circuit comporte un ou des transistors, de réduire le risque d'endommagement dudit ou desdits transistors de ce premier circuit. En l'absence d'un tel dispositif de pilotage, la chute de tension pourrait forcer le ou les transistors à fonctionner en mode linéaire ce qui pourrait les endommager.

Selon une caractéristique avantageuse de l'invention, ladite première borne de la batterie est la borne positive et ladite deuxième borne est la borne négative.

Selon une caractéristique avantageuse de l'invention, lesdits moyens de gestion d'alimentation électrique comprennent un premier transistor.

Ainsi, lesdits moyens de commande sont configurés pour, en cas de détection d'une chute de la tension de la batterie en dessous de ladite valeur seuil, commander l'état bloqué du premier transistor.

Selon une caractéristique avantageuse de l'invention, ledit premier transistor présente une électrode d'entrée raccordée à la première borne de la batterie, une électrode de sortie raccordée à ladite deuxième borne dudit premier circuit, et une autre électrode de sortie raccordable à la masse électrique.

Selon une caractéristique avantageuse de l'invention, lesdits moyens de commande comprennent un module de commande de transistor et un deuxième transistor comprenant une électrode d'entrée raccordée audit module de commande, une électrode de sortie raccordable à la masse électrique et une autre électrode de sortie raccordable à l'électrode d'entrée du premier transistor.

Selon une caractéristique avantageuse de l'invention, ledit dispositif comprend une résistance, dont une borne est raccordée à l'électrode d'entrée du deuxième transistor et dont l'autre borne est raccordable à la masse électrique.

Selon une caractéristique avantageuse de l'invention, le dispositif comprenant une unité de traitement informatique, lesdits moyens de détection sont réalisés sous forme d'instructions informatiques programmées dans ladite unité.

Selon une caractéristique avantageuse de l'invention, le dispositif comprend un convertisseur configuré pour convertir la tension de la batterie en une tension réduite, et lesdits moyens de détection sont configurés pour interpréter ladite tension réduite fournie par le convertisseur.

Selon une variante de réalisation de l'invention, lesdits moyens de détection comprennent un comparateur à hystérésis.

Selon une caractéristique avantageuse de l'invention, ledit élément de stockage d'énergie comprend un ou plusieurs condensateurs.

L'invention concerne aussi un ensemble pour un véhicule, ledit véhicule comprenant :
- une batterie électrique présentant une première borne et une deuxième borne,
- un élément de stockage d'énergie électrique dont une borne est reliée à la première borne de la batterie et dont l'autre borne est reliée à une masse électrique,

ledit ensemble comprenant :
   - un premier circuit, apte à consommer de l'électricité provenant de la batterie électrique, et présentant une première et une deuxième bornes raccordables respectivement aux première et deuxième bornes de la batterie électrique,
   - des moyens de gestion d'alimentation électrique configurés pour autoriser ou empêcher le passage de courant électrique entre ledit élément de stockage d'énergie électrique et ledit premier circuit,
ledit ensemble comprenant aussi un deuxième circuit raccordable à l'élément de stockage pour pouvoir être alimenté par ledit élément de stockage,
caractérisé en ce que ledit ensemble comprend aussi un dispositif de pilotage tel que décrit ci-dessus.

Préférentiellement, le deuxième circuit comprend une unité de traitement informatique et une mémoire dans laquelle ladite unité de traitement informatique est apte à réaliser une opération d'écriture.

Avantageusement, ledit ensemble comporte un troisième circuit raccordé à l'élément de stockage d'énergie, ledit troisième circuit comprenant un moteur et un module de commande dudit moteur, et le deuxième circuit comprend une unité de pilotage raccordée au module de commande dudit moteur et configurée pour, en cas de détection de chute de tension par lesdits moyens de détection, transmettre audit module de commande une consigne d'arrêt dudit moteur.

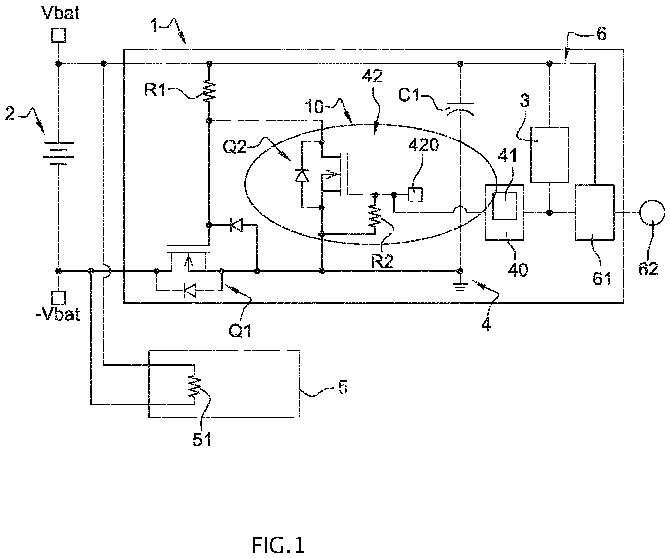

L'invention sera bien comprise à la lecture de la description suivante d'un exemple de réalisation, en référence à la figure unique qui est un schéma du dispositif de pilotage selon l'invention associé à une batterie et des circuits électriques et électroniques.

Comme rappelé ci-dessus, l'invention concerne un dispositif de pilotage 10 d'alimentation électrique de circuit pour un véhicule. Préférentiellement, ledit véhicule est un véhicule automobile, tel qu'une voiture. Ledit véhicule comprend une installation 1 électrique et/ou électronique qui comprend une batterie 2 électrique et des circuits électriques et/ou électroniques.

La batterie 2 électrique présente une première borne VBAT, à savoir la borne positive de la batterie, et une deuxième borne -VBAT, à savoir la borne négative de la batterie.

Le véhicule comprend aussi un élément de stockage d'énergie électrique dont une borne est reliée à la première borne VBAT et dont l'autre borne est reliée à une masse électrique. Dans l'exemple illustré aux figures, l'élément de stockage d'énergie électrique comprend un condensateur C1.

Lesdits circuits électriques ou électroniques comprennent des éléments aptes à consommer de l'électricité provenant de la batterie 2 électrique. Lesdits circuits comprennent en particulier un premier circuit 5 raccordé aux première et deuxième bornes -VBAT, VBAT de la batterie 2. Ledit premier circuit 5 comprend un élément 51 apte à consommer de l'électricité provenant de la batterie 2 électrique, par exemple un élément de chauffage additionnel ou un système d'éclairage.

L'installation 1 électrique et/ou électronique comprend des moyens de gestion d'alimentation électrique configurés pour autoriser ou empêcher le passage de courant électrique entre ledit élément de stockage d'énergie électrique C1 et ledit premier circuit 5.

Dans l'exemple illustré à la figure, les moyens de gestion d'alimentation électrique comprennent un premier transistor Q1, appelé transistor d'inversion batterie.

Comme détaillé ci-après, lesdits moyens de gestion d'alimentation électrique Q1 sont commandables pour, lors d'une chute de tension de la batterie en dessous d'une valeur seuil donnée, empêcher le passage de courant électrique entre l'élément de stockage d'énergie électrique C1 et ledit premier circuit 5, c'est-à-dire de sorte que l'élément de stockage d'énergie C1 ne puisse pas alimenter électriquement ledit au moins un circuit 5.

Ledit transistor Q1 présente une électrode d'entrée raccordée à la première borne VBAT de la batterie, par l'intermédiaire d'une résistance R1, une électrode de sortie raccordée à la deuxième borne -VBAT de la batterie, et une autre électrode de sortie raccordée à une masse électrique. La masse électrique peut être incluse dans le dispositif de pilotage ou dans une autre partie du véhicule. A titre d'exemple, on peut choisir une valeur de résistance R1 égale à 10 kOhms.

Le premier transistor Q1 permet de détecter un montage inversé de la batterie. En effet, en cas d'inversion de branchement des bornes de la batterie 2, la tension sur l'électrode d'entrée du premier transistor Q1 n'est pas suffisante pour assurer le passage de courant entre les électrodes de sortie du premier transistor Q1 de sorte que le premier transistor Q1 forme un interrupteur ouvert entre le premier circuit 5 et le condensateur C1 qui ne peut donc pas alimenter le premier circuit 5. Inversement, lorsque la batterie est correctement raccordée, donc que la première borne VBAT est raccordée à l'entrée du premier transistor Q1, via la résistance R1, la tension à laquelle elle est soumise assure le passage de courant entre les électrodes de sortie du premier transistor Q1, qui permet au premier circuit 5 d'être, si nécessaire, alimenté par le condensateur C1 de manière à pouvoir compenser, jusqu'à un certain niveau, une baisse de tension de la batterie 2.

Le dispositif de pilotage 10 permet de piloter le premier transistor Q1. Ledit dispositif de pilotage 10 comprend des moyens de détection 41 configurés pour détecter une chute de la tension de la batterie 2 en dessous d'une valeur seuil, par exemple en dessous de 7 Volts.

Ledit dispositif de pilotage 10 comprend aussi des moyens de commande 42 configurés pour, en cas de détection par le module de détection 41 d'une tension de la batterie 2 inférieure à ladite valeur seuil, commander l'état bloqué du premier transistor Q1, de manière à empêcher le premier circuit 5 d'être alimenté par décharge du condensateur C1.

Lesdits moyens de commande 42 comprennent un module de commande 420 de transistor et un deuxième transistor Q2. Le deuxième transistor Q2 comprend une électrode d'entrée raccordée audit module de commande 420, une électrode de sortie raccordée à la masse électrique et une autre électrode de sortie raccordée à l'électrode d'entrée du premier transistor Q1.

Les moyens de commande 42 sont agencés avec l'élément de stockage d'énergie C1 pour pouvoir être alimentés par ledit élément de stockage d'énergie C1 en cas de chute de tension de la batterie.

Une résistance R2, par exemple de 10 kOhms, présente une borne raccordée à l'électrode d'entrée du deuxième transistor Q2 et une borne raccordée à la masse électrique. Cette résistance R2 permet ainsi de maintenir par défaut, c'est-à-dire en l'absence de commande de tension pour maintenir le deuxième transistor Q2 passant, l'électrode d'entrée à un potentiel défini proche de la masse (0 Volts) et donc de maintenir le deuxième transistor Q2 à l'état bloqué.

Préférentiellement, le dispositif de pilotage 10 comprend une unité de traitement informatique 40, utilisée par exemple comme calculateur, et lesdits moyens de détection 41 sont réalisés sous forme d'un jeu d'instructions informatiques mémorisé et exécutable par l'unité de traitement informatique 40. Avantageusement, l'unité de traitement informatique 40 est un microcontrôleur ou un microprocesseur, L'unité de traitement informatique 40 comprend aussi des moyens d'émission d'un signal de consigne au module de commande 420 en fonction du résultat de la détection. Le signal de consigne peut être un signal binaire : un signal à 0 pour laisser le deuxième transistor Q2 bloqué et un signal à 1 pour commander au module de commande 420 d'appliquer une tension à l'électrode d'entrée du deuxième transistor Q2 pour qu'il soit passant.

Le dispositif comprend un convertisseur 3 raccordé à la batterie et configuré pour convertir la tension de la batterie 2 appliquée en entrée du convertisseur en une tension de sortie réduite. L'unité de traitement informatique 40 comprend une borne raccordée à la sortie dudit convertisseur 3. Lesdits moyens de détection 41 sont configurés pour acquérir la tension de sortie réduite dudit convertisseur 3 et détecter si la tension de sortie réduite correspond à une chute de la tension de batterie en dessous de ladite valeur seuil.

Selon une variante non illustrée aux figures, lesdits moyens de détection peuvent être réalisés sous forme de composant(s) électronique(s) distinct(s) d'une unité de traitement informatique. Ainsi selon un mode de réalisation particulier, lesdits moyens de détection comprennent un comparateur à hystérésis. La réalisation des moyens de détection par des composants électroniques permet d'améliorer la réactivité du dispositif par comparaison avec une solution informatique.

L'installation électrique et/ou électronique comprend un deuxième circuit 4 raccordé à l'élément de stockage pour pouvoir, à l'état bloqué dudit premier transistor Q1, être alimenté par le condensateur C1. Lesdits moyens de commande 42 font partie de ce deuxième circuit 4. Ainsi, en fonctionnement normal, lesdits moyens de commande 42 sont alimentés par la batterie et en cas de chute de tension, ils peuvent, tout en continuant à être alimenté par le condensateur C1, commander l'état bloqué du premier transistor Q1 pour que le premier circuit 5 ne consomme pas l'énergie du condensateur C1.

Dans l'exemple illustré à la figure, ledit ensemble comporte un troisième circuit 6 raccordé à l'élément de stockage d'énergie C1 pour pouvoir être alimenté par ledit élément de stockage d'énergie. Ledit troisième circuit 6 comprend un moteur électrique 62 et un module de commande 61 dudit moteur 62. Ledit moteur est par exemple le moteur d'entraînement d'un ventilateur monté dans un boîtier d'un appareil de chauffage, ventilation et/ou climatisation (encore appelé HVAC pour Heating, Ventilation and Air-Conditioning en anglais).

Le deuxième circuit 4 comprend une unité de pilotage, de préférence formée par l'unité de traitement informatique 40, raccordée au module de commande 61 dudit moteur 62 et configurée pour, en cas de détection de chute de tension par lesdits moyens de détection, transmettre audit module de commande 61 une consigne d'arrêt dudit moteur 62.

Ainsi, en cas de chute de tension trop importante de la batterie, le deuxième circuit 4, qui comprend lesdits moyens de commande 42, continue d'être alimenté par le condensateur pour permettre, d'une part, de commander l'ouverture de l'interrupteur formé par le premier transistor Q1 afin d'isoler le deuxième circuit 5 vis-à-vis du condensateur C1, et, d'autre part, de commander l'arrêt du moteur 62 via l'émission d'une consigne à son module de commande 61. Ainsi, les premier et troisième circuits 5, 6 ne consomment pas l'énergie du condensateur C1, qui peut être réservée pour le fonctionnement d'un autre circuit, en particulier pour le fonctionnement de l'unité de traitement informatique 40 du deuxième circuit 4 afin de lui permettre de finaliser une opération d'écriture en mémoire. Ladite mémoire est par exemple une mémoire morte effaçable électriquement et programmable, encore appelée EEPROM pour Electrically-Erasable Programmable Read-Only Memory en anglais.

Bien qu'au moins un mode de réalisation de l'invention ait été illustré et décrit, il convient de noter que d'autres modifications, substitutions et alternatives apparaissent à l'homme de l'art et peuvent être changées sans sortir de la portée de l'objet décrit ici.

La présente demande envisage de couvrir toutes les adaptations et variations des modes de réalisation décrits ci-dessus. De plus, le terme « comprenant » n'exclut pas d'autres éléments ou étapes et le terme « un » n'exclut pas le pluriel. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus. On notera qu'il faut inclure dans la portée du brevet toutes les modifications envisagées ci-dessus dans la mesure où elles font partie de la contribution des inventeurs à l'art antérieur. De telles modifications, substitutions et alternatives peuvent être réalisées sans sortir du cadre de la présente invention, comme définie par les revendications.

## Revendications

1. Ensemble pour un véhicule, ledit véhicule comprenant :
- une batterie (2) électrique présentant une première borne (VBAT) et une deuxième borne (-VBAT),
- un élément de stockage d'énergie électrique (C1) dont une borne est reliée à la première borne (VBAT) de la batterie et dont l'autre borne est reliée à une masse électrique,
ledit ensemble comprenant :
- un premier circuit (5), apte à consommer de l'électricité provenant de la batterie (2) électrique, et présentant une première et une deuxième bornes raccordable respectivement aux première et deuxième bornes (-VBAT, VBAT) de la batterie (2) électrique,
- des moyens de gestion d'alimentation électrique comprenant un premier transistor (Q1) configurés pour autoriser ou empêcher le passage de courant électrique entre ledit élément de stockage d'énergie électrique (C1) et ledit premier circuit (5)
ledit ensemble comprenant aussi un deuxième circuit (4) raccordé à l'élément de stockage pour pouvoir être alimenté par ledit élément de stockage (C1),
- un dispositif de pilotage comportant :
• des moyens de détection (41) configurés pour détecter une chute de la tension de la batterie (2) électrique en dessous d'une valeur seuil ;
• des moyens de commande (42) configurés pour, en cas de détection d'une chute de la tension de la batterie en dessous de ladite valeur seuil, commander lesdits moyens de gestion d'alimentation électrique (Q1) pour empêcher le passage de courant électrique entre l'élément de stockage d'énergie électrique (C1) et ledit premier circuit (5),
le deuxième circuit comprenant les moyens de commande, et le deuxième circuit étant configuré pour pouvoir être alimenté par l'élément de stockage d'énergie électrique (C1) à l'état bloqué dudit premier transistor (Q1).

2. Ensemble selon la revendication 1, **caractérisé en ce que** ledit premier transistor (Q1) présente une électrode d'entrée raccordée à la première borne (VBAT) de la batterie, une électrode de sortie raccordée à ladite deuxième borne dudit premier circuit (5), et une autre électrode de sortie raccordable à la masse électrique.

3. Ensemble selon la revendication 2, **caractérisé en ce que** lesdits moyens de commande (42) comprennent un module de commande (420) de transistor et un deuxième transistor (Q2) comprenant une électrode d'entrée raccordée audit module de commande (420), une électrode de sortie raccordable à la masse électrique et une autre électrode de sortie raccordable à l'électrode d'entrée du premier transistor (Q1).

4. Ensemble selon la revendication 3, **caractérisé en ce que** ledit dispositif comprend une résistance (R2), dont une borne est raccordée à l'électrode d'entrée du deuxième transistor (Q2) et dont l'autre borne est raccordable à la masse électrique.

5. Ensemble selon l'une des revendications précédentes, **caractérisé en ce que**, le dispositif comprenant une unité de traitement informatique (40), lesdits moyens de détection (41) sont réalisés sous forme d'instructions informatiques programmées dans ladite unité.

6. Ensemble selon la revendication 5, **caractérisé en ce que** le dispositif comprend un convertisseur (3) configuré pour convertir la tension de la batterie en une tension réduite, et lesdits moyens de détection (41) étant configurés pour interpréter ladite tension réduite fournie par le convertisseur (3).

7. Ensemble selon l'une des revendications précédentes, **caractérisé en ce que** lesdits moyens de détection (41) comprennent un comparateur à hystérésis.

8. Ensemble selon l'une des revendications précédentes, **caractérisé en ce que** ledit élément de stockage d'énergie (C1) comprend un ou plusieurs

9. Ensemble selon l'une des revendications précédentes, **caractérisé en ce que** le deuxième circuit (4) comprend une unité de traitement informatique et une mémoire dans laquelle ladite unité de traitement informatique est apte à réaliser une opération d'écriture.

10. Ensemble selon l'une des revendications précédentes, **caractérisé en ce que** ledit ensemble comporte un troisième circuit (6) raccordé à l'élément de stockage d'énergie (C1), ledit troisième circuit (6) comprenant un moteur (62) et un module de commande (61) dudit moteur (62),
et **en ce que** le deuxième circuit (4) comprend une unité de pilotage raccordée au module de commande (61) dudit moteur (62) et configurée pour, en cas de détection de chute de tension par lesdits moyens de détection, transmettre audit module de commande (61) une consigne d'arrêt dudit moteur (62).

## Patentansprüche

1. Anordnung für ein Fahrzeug, wobei das Fahrzeug umfasst:
- eine elektrische Batterie (2), aufweisend eine erste Anschlussklemme (VBAT) und eine zweite Anschlussklemme (-VBAT),
- ein Speicherelement für elektrische Energie (C1), dessen eine Anschlussklemme mit der ersten Anschlussklemme (VBAT) der Batterie verbunden ist und dessen andere Anschlussklemme mit einer elektrischen Masse verbunden ist,
die Anordnung umfassend:
- eine erste Schaltung (5), die Strom aus der elektrischen Batterie (2) verbrauchen kann, und aufweisend eine erste und eine zweite Anschlussklemme, die an die erste und zweite Anschlussklemme (-VBAT, VBAT) der elektrischen Batterie (2) anschließbar sind,
- Mittel zum Management der Stromversorgung, umfassend einen ersten Transistor (Q1), die so konfiguriert sind, dass sie den Durchgang von elektrischem Strom zwischen dem Speicherelement für elektrische Energie (C1) und der ersten Schaltung (5) zulassen oder verhindern,
wobei die Anordnung auch eine zweite Schaltung (4) umfasst, die an das Speicherelement angeschlossen ist, um von dem Speicherelement (C1) mit Strom versorgt werden zu können,
- eine Steuerungsvorrichtung, enthaltend:
• Erfassungsmittel (41), die so konfiguriert sind, dass sie einen Abfall der Spannung der elektrischen Batterie (2) unter einen Schwellenwert erfassen;
• Befehlsmittel (42), die so konfiguriert sind, dass sie bei Erfassung eines Abfalls der Batteriespannung unter den Schwellenwert den Mitteln zum Management der Stromversorgung (Q1) befehlen, den Durchgang von elektrischem Strom zwischen dem Speicherelement für elektrische Energie (C1) und der ersten Schaltung (5) zu verhindern,
wobei die zweite Schaltung die Befehlsmittel umfasst und die zweite Schaltung so konfiguriert ist, dass sie im gesperrten Zustand des ersten Transistors (Q1) von dem Speicherelement für elektrische Energie (C1) mit elektrischer Energie versorgt werden kann.

2. Anordnung nach Anspruch 1, **dadurch gekennzeichnet, dass** der erste Transistor (Q1) eine Eingangselektrode, die an die erste Anschlussklemme (VBAT) der Batterie angeschlossen ist, eine Ausgangselektrode, die an die zweite Anschlussklemme der ersten Schaltung (5) angeschlossen ist, und eine weitere Ausgangselektrode, die an die elektrische Masse anschließbar ist, aufweist.

3. Anordnung nach Anspruch 2, **dadurch gekennzeichnet, dass** die Befehlsmittel (42) ein Transistorbefehlsmodul (420) und einen zweiten Transistor (Q2) umfassen, der eine an das Befehlsmodul (420) angeschlossene Eingangselektrode, eine an die elektrische Masse anschließbare Ausgangselektrode und eine weitere mit der Eingangselektrode des ersten Transistors (Q1) anschließbare Ausgangselektrode umfasst.

4. Anordnung nach Anspruch 3, **dadurch gekennzeichnet, dass** die Vorrichtung einen Widerstand (R2) umfasst, dessen eine Anschlussklemme an die Eingangselektrode des zweiten Transistors (Q2) angeschlossen ist und dessen andere Anschlussklemme an die elektrische Masse anschließbar ist.

5. Anordnung nach einem der vorhergehenden Ansprüche, **dadurch gekennzeichnet, dass**, da die Vorrichtung eine Computerverarbeitungseinheit (40) umfasst, die Erfassungsmittel (41) in Form von Computeranweisungen ausgeführt sind, die in dieser Einheit programmiert sind.

6. Anordnung nach Anspruch 5, **dadurch gekennzeichnet, dass** die Vorrichtung einen Wandler (3) umfasst, der so konfiguriert ist, dass er die Batteriespannung in eine reduzierte Spannung umwandelt, und wobei die Erfassungsmittel (41) so konfiguriert sind, dass sie die vom Wandler (3) bereitgestellte reduzierte Spannung interpretieren.

7. Anordnung nach einem der vorhergehenden Ansprüche, **dadurch gekennzeichnet, dass** die Erfassungsmittel (41) einen Komparator mit Hysterese umfassen.

8. Anordnung nach einem der vorhergehenden Ansprüche, **dadurch gekennzeichnet, dass** das Speicherelement für Energie (C1) einen oder mehrere Kondensatoren umfasst.

9. Anordnung nach einem der vorhergehenden Ansprüche, **dadurch gekennzeichnet, dass** die zweite Schaltung (4) eine Computerverarbeitungseinheit und einen Speicher umfasst, in dem die Computerverarbeitungseinheit einen Schreibvorgang ausführen kann.

10. Anordnung nach einem der vorhergehenden Ansprüche, **dadurch gekennzeichnet, dass** die Anordnung eine dritte Schaltung (6) enthält, die an das Speicherelement für Energie (C1) angeschlossen ist, wobei die dritte Schaltung (6) einen Motor (62) und ein Befehlsmodul (61) für den Motor (62) umfasst,
und dadurch, dass die zweite Schaltung (4) eine Steuereinheit umfasst, die an das
Befehlsmodul (61) für den Motor (62) angeschlossen und so konfiguriert ist, dass sie im Fall der Erfassung eines Spannungsabfalls durch die Erfassungsmittel dem Befehlsmodul (61) einen Befehl zum Anhalten des Motors (62) übermittelt.

## Claims

1. Assembly for a vehicle, said vehicle comprising:
- an electrical battery (2) having a first terminal (VBAT) and a second terminal (-VBAT),
- an electrical energy storage element (C1), one terminal of which is linked to the first terminal (VBAT) of the battery and the other terminal of which is linked to an electrical ground,
said assembly comprising:
- a first circuit (5), capable of consuming electricity coming from the electrical battery (2), and having a first and a second terminal connectable to the first and second terminals (-VBAT, VBAT) of the electrical battery (2), respectively,
- electrical power supply management means comprising a first transistor (Q1), said means being configured to allow or prevent the passage of electrical current between said electrical energy storage element (C1) and said first circuit (5),
said assembly also comprising a second circuit (4) connected to the storage element so as to be able to be powered by said storage element (C1),
- a controlling device comprising:
• detection means (41) configured to detect a drop in the voltage of the electrical battery (2) below a threshold value;
• command means (42) configured, in the case of detection of a drop in the voltage of the battery below said threshold value, to command said electrical power supply management means (Q1) to prevent the passage of electrical current between the electrical energy storage element (C1) and said first circuit (5),
the second circuit comprising the command means, and the second circuit being configured to be able to be powered by the electrical energy storage element (C1) in the off-state of said first transistor (Q1).

2. Assembly according to Claim 1, **characterized in that** said first transistor (Q1) has an input electrode connected to the first terminal (VBAT) of the battery, an output electrode connected to said second terminal of said first circuit (5), and a further output electrode connectable to the electrical ground.

3. Assembly according to Claim 2, **characterized in that** said command means (42) comprise a transistor command module (420) and a second transistor (Q2) comprising an input electrode connected to said command module (420), an output electrode connectable to the electrical ground and a further output electrode connectable to the input electrode of the first transistor (Q1).

4. Assembly according to Claim 3, **characterized in that** said device comprises a resistor (R2), one terminal of which is connected to the input electrode of the second transistor (Q2) and the other terminal of which is connectable to the electrical ground.

5. Assembly according to any of the preceding claims, **characterized in that**, the device comprising a computer processing unit (40), said detection means (41) are implemented in the form of computer instructions programmed in said unit.

6. Assembly according to Claim 5, **characterized in that** the device comprises a converter (3) configured to convert the voltage of the battery into a reduced voltage, said detection means (41) being configured to interpret said reduced voltage supplied by the converter (3) .

7. Assembly according to any of the preceding claims, **characterized in that** said detection means (41) comprise a hysteresis comparator.

8. Assembly according to any of the preceding claims, **characterized in that** said energy storage element (C1) comprises one or more capacitors.

9. Assembly according to any of the preceding claims, **characterized in that** the second circuit (4) comprises a computer processing unit and a memory in which said computer processing unit is capable of performing a write operation.

10. Assembly according to any of the preceding claims, **characterized in that** said assembly includes a third circuit (6) connected to the energy storage element (C1), said third circuit (6) comprising a motor (62) and a command module (61) for said motor (62),
and **in that** the second circuit (4) comprises a controlling unit connected
to the command module (61) for said motor (62) and configured, in the case of detection of a drop in voltage by said detection means, to transmit, to said command module (61), an order for the shut down of said motor (62) .
